# EUROPEAN PATENT SPECIFICATION

(11) **EP 3 883 813 B1**
(45) Date of publication and mention of the grant of the patent: **08.05.2024**
(21) Application number: 19829348.2
(22) Date of filing: 19.11.2019
(51) Int. Cl.: B60N 2/68, B60N 2/24

(54) **FRAME FOR SEATS IN PUBLIC TRANSPORT VEHICLES**
RAHMEN FÜR SITZE IN ÖFFENTLICHEN VERKEHRSMITTELN
CADRE POUR SIÈGES DANS DES VÉHICULES DE TRANSPORT EN COMMUN

(30) Priority: 23.11.2018 PL 42788218
(43) Date of publication of application: 29.09.2021
(73) Proprietor: Szymanski, Maciej, 60-434 Poznan (PL)
(72) Inventor: Szymanski, Maciej, 60-434 Poznan (PL)
(74) Representative: Luczak, Jerzy
(86) International application number: PCT/PL2019/000104
(87) International publication number: WO 2020/106166

(56) References cited:
- EP-A1- 2 366 584
- EP-A1- 3 398 807
- WO-A1-2013/142798
- US-A- 6 027 167
- US-A- 6 059 369

## Description

The subject of the invention is a frame for seats in public transport vehicles, used in vehicles such as trams, school buses or other vehicles for transporting passengers on short distances, with low requirements for the comfort of travel.

In the currently existing solutions, the frame for seats in public transport vehicles is an ergonomically shaped bent profile that forms a backrest and a seat. Backrest and seat pillows are attached to this profile. The existing solutions use profiles with a ring section - circular or resembling a square.

It is known from U.S. patent application No. US 12554198 A / US 6027167 A, a method for safe restraint of occupants in a crashing vehicle using safety belts, and a double tube frame construction vehicle seat. In a crash the kinetic energy of the occupant is restrained by the belt and by the cooperating resiliently deformable double tube frame construction in such a way that, at a moderate load, the upper portion of this double tube frame construction will move resiliently, but with a bigger load a permanent deformation will be the result. The device includes a seat frame with a seat portion and a back rest portion being made of a parallel tube frame having two tubes arranged above/under and forward/behind, at the seat portion and at the back rest portion respectively, up to a height at the breast of the occupant. The tubes are twisted above this height to a position side by side. Reinforcing, deformable form plates are rigidly arranged between the parallel tubes at least at the seat portion and at the lower portion of the back rest portion.

The Application US 84665797 A / US 6059369 A, presents composite vehicle seat back frame and method of manufacturing thereof. Lightweight, cost-effective composite seat back frames comprise braided carbon fiber reinforced attachment portions connected by braided, glass fiber-reinforced, generally U-shaped back portions, all these portions impregnated with a polymeric matrix resin. One or more of the braided glass or carbon fiber portions are preferably woven by a multiaxial weaving machine to maximize composite properties. The braids may be woven around a permanent or removable mandrel, and may contain pivot bushings or seat articulation hardware. The seat back frames thus produced are lighter than their aluminum counterparts.

It is known from European patent application No. EP 18170705 A / EP 3398807 A1 vehicle seat, which comprises a support structure and a first and second shaped panel supported by the support structure and respectively comprising the seat and the backrest of the seat. The support structure comprises a first and a second side support element which are stably connected to each other by means of a first upper C-shaped connection element and a second lower C-shaped connection element. The second panel has a lower end edge positioned opposite to the upper edge supported by the first upper connection element. The lower end edge is directly attached to an end edge of the first panel which is positioned on the opposite side to the edge facing the second lower C-shaped connection element. The first and second panels overlap each other at the contact area between the two edges. The first C-shaped connection element is provided with a plurality of light generating elements suitable to create a light beam directly from the first upper C-shaped connection element towards the lower end edge of the second panel and to light a lower area of the seat.

From European patent application No. EP 10425083 A / EP 2366584 A1, a vehicle seat is known, which comprises a supporting structure and a first and a second contoured panel fitted to the supporting structure and respectively defining the seat portion and the backrest of the seat. The supporting structure comprises a first and a second lateral supporting member extending along opposite sides of the seat and joined to one another by a cross-member extending along the join between the seat portion and the backrest. The first and the second panel are covered with respective flexible cover sheets that are fixed securely to the supporting structure.

From Japan patent application No. JP 2014 091439 A, a vehicle seat is known, in which a pipe member transformed from a circle to an ellipse is subjected to crushing processing in a rounded bent part, and a pair of opposing flat surfaces are molded in the oblong diameter direction. An inner bracket is formed substantially in a U-shaped cross section in which two edges are extended from a bottom plate so as to sandwich the oblong. The inner bracket is lapped on a rounded bent part of the pipe member so that the edge covers oblong flat surfaces across the oblong, and is welded to the rounded bent part using the flat surface as a welding point S.

Such solutions require reinforcements in the section where the seat transits into the backrest, which raises the vehicle's mass and creates a gap between the pillows' side walls and the profile, where dirt can accumulate. Keys, credit cards or change can potentially be trapped in such places. Depending on the thickness of the used fabric, the gap between the seat and the upholstered element can have different dimensions. The profiles used in this solution make for an unsightly design.

The essence of the invention, namely the frame for seats in public transport vehicles in the form of an ergonomically shaped bent profile that creates the backrest and the seat, to which brackets for the seat and backrest pillows are attached, wherein the profile in the section perpendicular to its longitudinal axis has an outline similar to an ellipse, consists in that the longer section axis of the tube is tilted upwards / to the outside from the vertical plane, which forms the frame's perpendicular bisector, by angle α (10 - 30)°, preferably 20°.

Preferably, the profile is made from two flat surface connected with arching surfaces.

Using the solution according to the invention, the following technical and utilitarian effects were obtained:
- the frame's increased strength caused by the distribution of stresses within the profile,
- the frame's reduced weight due to its increased strength, translating into economic effects of the vehicle's design and operation, such as savings in construction materials and fuel materials,
- the possibility of use of pillows with inclined side surfaces with the seat's frame which, once occupied by a passenger, wedge into the profile's inclined surfaces thus eliminating the gap present in the existing solutions, which prevents the accumulation of dirt in the gaps,
- improved aesthetics of the seat's frame,
- the upholstered elements are propped along the entire profile, because the inclined surfaces of side profiles constitute linear supports for the upholstered elements,
- the need to install additional props for upholstered elements in the seat's frame is eliminated, which reduces the seat's mass and lowers production costs,
- the fabric's thickness and the method of application of upholstered elements are not of key importance,
- the modification of the dimensions of upholstered elements by using thick fabrics does not affect the possibilities of installing these elements in the seat's frame. In the existing solution, the modification of dimensions may render it impossible to install an element.

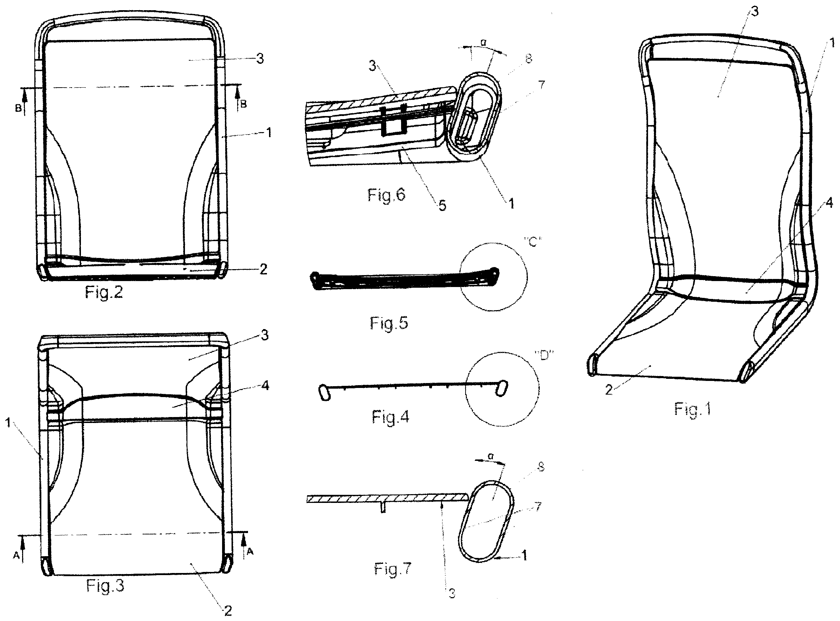

The subject of the invention in an exemplary, but not limiting embodiment is shown in a drawing in which Fig. 1 shows the seat's frame in a spatial view, Fig. 2 shows the frame making a backrest, Fig. 3 shows the frame making a seat, Fig. 4 shows the frame's section in A-A plane from Fig. 3, Fig. 5 shows the frame's section in B-B plane from Fig. 2, and Fig. 6 shows the detail C from Fig. 5, and Fig. 7 shows the detail D from Fig. 4

The frame for seats in public transport vehicles is an ergonomically shaped bent L-profile. This profile makes an element of the backrest 3 and seat 2, to which brackets 4 of pillows 5 of the seat 2 and the backrest 3, not shown in the drawing, are attached. In the section in plane perpendicular to its longitudinal axis the profile 1 has an outline similar to an ellipse and its longer section axis is tilted upwards / outside from the vertical plane, which forms the frame's perpendicular bisector, by angle α (10 - 30)°, preferably 20°.

There exist variations of the embodiment where the profile 1 is made from two flat surfaces 7, connected with arching surfaces 8.

Pillows 5 of the seat 2 and the backrest 3 are introduced into a frame shaped in this manner. Thanks to their flexibility and the inclined side surface, the pillows 5, when occupied by passengers, tightly adhere to the surfaces of profile 1 in place of contact, thus eliminating the gap.

## Claims

1. The frame for seats in public transport vehicles in the form of an ergonomically shaped bent profile that creates the backrest and the seat, to which brackets for the seat and backrest pillows are attached, wherein the profile (1) in the section perpendicular to its longitudinal axis has an outline similar to an ellipse, **characterized in that** the longer section axis of the tube is tilted upwards / to the outside from the vertical plane, which forms the frame's perpendicular bisector, by angle α (10 - 30)°, preferably 20°.

2. The frame according to claim 1, **characterized in that** the profile (1) is made from two flat surfaces (7), connected with arching surfaces (8).

## Patentansprüche

1. Rahmen für Sitze in öffentlichen Verkehrsmitteln in Form eines ergonomisch geformten gebogenen Profils, das die Rückenlehne und den Sitz bildet, an dem Halterungen für die Sitz- und Rückenlehnenkissen befestigt sind, wobei das Profil (1) im Querschnitt senkrecht zu seiner Längsachse einen ellipsenähnlichen Umriss aufweist, **dadurch gekennzeichnet, dass** die längere Querschnittsachse des Profils aus der Vertikalebene, die die senkrechte Winkelhalbierende des Rahmens bildet, um den Winkel α (10 - 30)°, vorzugsweise 20°, nach oben / außen geneigt ist.

2. Rahmen nach Anspruch 1, **dadurch gekennzeichnet, dass** das Profil (1) aus zwei ebenen Flächen (7) besteht, die mit gewölbten Flächen (8) verbunden sind.

## Revendications

1. Le cadre pour sièges destinés aux véhicules de transport public, sous forme d'un profil courbé conçu de manière ergonomique, constituant le dossier et l'assise, auxquels des supports pour les coussins de l'assise et du dossier sont fixés, dans lequel le profil (1) dans la section perpendiculaire à son axe longitudinal a un contour similaire à une ellipse, **caractérisé en ce que** l'axe de la section la plus longue du profil est incliné vers le haut / vers l'extérieur par rapport au plan vertical, formant la bissectrice perpendiculaire du cadre de siège d'un angle α (10 - 30)°, de préférence 20°.

2. Le cadre de siège, selon la revendication 1, **caractérisé en ce que** le profil (1) est constitué de deux surfaces planes (7), reliées par des surfaces arquées (8).
